# EUROPÄISCHE PATENTSCHRIFT

(11) **EP 1 929 886 B1**
(45) Veröffentlichungstag und Bekanntmachung des Hinweises auf die Patenterteilung: **25.05.2011**
(21) Anmeldenummer: 07117561.6
(22) Anmeldetag: 28.09.2007
(51) Int. Cl.: A23L 3/3409, A23B 4/044, A23B 4/03

(54) **Behandlungsanlage für Lebensmittel, insbesondere für Rohwurst und Rohpökelwaren**
Processing facility for foodstuffs, in particular for raw sausage and raw cured products
Installation de traitement pour produits alimentaires, en particulier saucisses crues et produits salés crus

(30) Priorität: 29.09.2006 DE 202006015151 U
(43) Veröffentlichungstag der Anmeldung: 11.06.2008
(73) Patentinhaber: Vemag Anlagenbau GmbH, 27283 Verden/Aller (DE)
(72) Erfinder: Riebel, Axel, 27283, Verden (DE)
(74) Vertreter: Eisenführ, Speiser & Partner

(56) Entgegenhaltungen:
- EP-A- 0 709 634
- WO-A-94/08462
- DE-A1- 10 339 296
- DE-U1-202004 000 439
- DATABASE WPI Week 199016 Derwent Publications Ltd., London, GB; AN 1990-122758 XP002474832 & SU 1 514 307 A (TIMOSHCHUK I I) 15. Oktober 1989 (1989-10-15) & SU 1 514 307 A1 (TIMOSHCHUK IVAN [SU]; UKHO ANDREJ N [SU]; BAGMUT NIKOLAJ YU [SU]; BELO) 15. Oktober 1989 (1989-10-15)

## Beschreibung

Die Erfindung betrifft eine Behandlungsanlage für Lebensmittel, insbesondere für Rohwurst und Rohpökelwaren (im Folgenden Produkt genannt), mit einer geschlossenen Behandlungskammer, mindestens einem mit der Behandlungskammer verbundenen Zufuhrkanal zum Einleiten eines Gases oder Gasgemisches in die Behandlungskammer und mindestens einem ersten mit der Behandlungskammer verbundenen Auslasskanal zum Ableiten eines Gases oder Gasgemisches aus der Behandlungskammer.

Behandlungsanlagen der oben beschriebenen Art sind bekannt und werden vorwiegend zur Behandlung von Lebensmitteln, insbesondere zur Reifung und Lagerung von Produkten wie z. B. Salami und Schinken eingesetzt. Bei üblichen Verfahren der Rohwurstbehandlung ist der Prozess in zwei Abschnitte unterteilt: Der erste Abschnitt wird als Vorreifen oder Reifen bezeichnet, dabei findet ggf. auch das Räuchern der Produkte statt. Der zweite Abschnitt wird als Nachreifen und Lagern bezeichnet. Die in beiden Abschnitten unterschiedlich schnell stattfindende Trocknung bewirkt, dass über den Entzug von Wasser das Produkt länger haltbar gemacht wird. Darüber hinaus hat Räuchern eine zusätzliche konservierende Wirkung. Die Produkte werden im Behandlungsraum auf Wagen oder Gestellen (im Folgenden als Wagen bezeichnet) liegend oder hängend gehängt platziert.

Im ersten Behandlungsabschnitt wird das Gas oder Gasgemisch in bekannten Anordnungen vertikal von oben entlang den Seitenwänden in die Behandlungskammern eingeleitet. Das Gas oder Gasgemisch strömt weiter entlang des Bodens der Behandlungskammer und anschließend von unten durch die Wagen und wird mittels eines an der Decke in der Mitte der Behandlungskammer angeordneten Auslasskanals aus der Behandlungskammer abgeleitet. Da das Gas oder Gasgemisch beim Eintritt unten in die Wagen eine geringere relative Luftfeuchtigkeit als beim Austritt oben aus den Wagen aufweist, kommt es dazu, dass Produkte, die sich im unteren Bereich der Wagen befinden, stärker getrocknet werden als Produkte im oberen Bereich des Wagens. Nach Beendigung des ersten Behandlungsabschnitts weisen die Produkte Unterschiede im Gewichtsverlust auf.

Im zweiten Abschnitt werden die Produkte bei niedrigeren Temperaturen weiter getrocknet. Hierzu werden die Wagen in eine zweite Behandlungskammer gefahren. Das Gasgemisch wird hier entweder wie im ersten Abschnitt geführt, oder es wird horizontal eingeleitet und strömt von oben durch die Wagen. Bei entsprechender Gasgemisch- und Prozessführung werden die Gewichtsunterschiede zwischen den Produkten deutlich reduziert. Dies setzt jedoch voraus, dass sowohl der erste wie zweite Behandlungsabschnitt entsprechend dem Trocknungsfortschritt beendet und die Wagen entsprechend zu einem genau einzuhaltenden Zeitpunkt von der ersten in die zweite Behandlungskammer transportiert werden. Die benötigte Zeitdauer kann zwischen den verschiedenen produzierten Produktsorten und -chargen stark variieren, so dass sich typischerweise Gewichtsunterschiede zwischen den einzelnen Produkten und Chargen ergeben. Zudem müssen bei diesem Trocknungsverfahren zwei Behandlungskammern bereitgestellt und die Wagen transportiert werden.

Der Lebensmittelmarkt zeigt neuerdings eine höhere Nachfrage nach einzeln verpackten Rohwürsten mit kleinen Durchmessern (Kalibern). Aus wirtschaftlichen Gründen soll für diese Produkte das vorgegebene und aufgedruckte Gewicht möglichst genau eingehalten und auf keinen Fall unterschritten werden. Gleichzeitig wird versucht, die Behandlungszeit dieser Produkte sehr kurz zu halten. Aus der Betrachtung dieser Marktbegebenheiten wird deutlich, dass eine Trocknung der Produkte auf ein möglichst genau definiertes Endgewicht in nur einem Behandlungsabschnitt von erheblichem wirtschaftlichen Vorteil ist.

Eine solche Anlage ist beispielsweise aus WO 94108462 A bekannt. Sie weist eine Mischkammer zum Mischen von Luft und Flüssigrauch mit starren, vertikalen Auslässen auf. Durch die Auslässe gelangt das Luft-Rauch-Gemisch in die Behandlungskammer

DE 20 2004 000 439 U1 zeigt eine weitere Rauchbehandlungsanlage zum Räuchern von Lebensmitteln mit einem Sägemehl-Raucherzeuger, der in der Tür der Behandlungskammer angeordnet ist. In die Kammer weist ein horizontal angeordneter Raucheintrittskanal sowie ein ebenfalls horizontal angeordneter Rauchaustrittskanal. Beide Kanäle sind mit Klappen verschließbar.

DE 103 39 296 A1 zeigt eine weitere Anlage zum Behandeln von Lebensmitteln mit einem Behandlungsraum und einem Lüfterraum, welcher zwei Luftausblasöffnungen aufweist, durch die Luft in vertikaler Richtung in den Raum eingeblasen wird. Die Luftausblasöffnungen sind mittels einer Drehklappe verschließbar.

In EP 0 709 634 A2 ist eine weitere Trocknungsanlage für Lebensmittel offenbart. Diese Anlage weist eine Behandlungskammer mit einer Infrarotheizeinrichtung auf und zwei vertikal verlaufenden Kanälen, wobei ein Kanal ein Lufteinlass und der andere Kanal als Luftauslass dient. Die Kanäle weisen eine Vielzahl an Öffnungen auf, durch die Luft in horizontaler Richtung in die Behandlungskammer abgegeben wird. Eine ähnliche Anlage offenbart auch SU 1514307.

Um die Trocknung der Produkte in einer Behandlungskammer durchführen als auch die bei der Trocknung der Produkte entstehenden Gewichtsunterschiede reduzieren zu können, sind in verbesserten Behandlungsanlagen je zwei Zufuhrkanäle mit einem im wesentlichen viereckigen Querschnitt in den oberen Ecken der Behandlungskammer angeordnet, ein Kanal für die horizontale und eine für die vertikale Einleitung des Gases oder Gasgemisches. Durch diese Anordnung wird erreicht, dass die Wagen sowohl von unten als auch von oben durchströmbar sind, ohne diese in eine zweite Behandlungskammer verschieben zu müssen. Der dadurch erzielte Vorteil, dass der Trocknungsvorgang komplett in nur einer Behandlungskammer durchgeführt werden kann, wird allerdings dadurch relativiert, dass zwei Kanalsysteme zur Einleitung des Gasgemisches bereitgestellt werden müssen. Bei der Ableitung des Gases oder Gasgemisches aus der Behandlungskammer besitzen bekannte Lösungen einen Kanal, dessen eine Seitenwand sich nahezu über die gesamte Seitenwand der Behandlungskammer erstreckt und eine Art Doppelwand erzeugt, so dass der benötigte Bauraum erhöht und die Kapazität der Behandlungskammer deutlich reduziert wird.

Eine bekannte Verbesserung liegt darin, drehbare Zufuhrkanäle beispielsweise mit kreisförmigem Querschnitt und einer Vielzahl an Auslassdüsen gleicher Ausrichtung an den oberen Ecken der Behandlungskammer einzubauen, so dass die Einleitung des Gasgemisches in einer Endstellung im wesentlichen horizontal und in der anderen Endstellung im wesentlichen vertikal in die Behandlungskammer, aber auch stufenlos zwischen den beiden Endstellungen mittels eines einzigen Zufuhrkanals erfolgen kann. Nachteilig bei dieser konstruktiv aufwendigen Lösung ist, dass durch den Rauchgehalt des Gasgemisches Teer an die beweglichen Teile der Verstellvorrichtungen gelangt und dieser die Verstellbarkeit des Zufuhrkanals stark beeinträchtigt. Des weiteren wird durch den kreisförmigen Querschnitt des Zufuhrkanals der für die Wagen zur Verfügung stehende Bauraum einer Behandlungskammer mehr eingeschränkt als bei viereckigen Kanälen.

Der vorliegenden Erfindung liegt die Aufgabe zugrunde, die oben beschriebenen Nachteile des Stands der Technik zu reduzieren und eine Behandlungsanlage bereitzustellen, die es auf konstruktiv einfache Weise ermöglicht, die Strömung des Gases oder Gasgemisches so zu führen, dass die Wagen sowohl im wesentlichen von der Decke als auch im wesentlichen vom Boden der Behandlungskammer her bei optimaler Ausnutzung des zur Verfügung stehenden Bauraums durchströmbar sind.

Diese Aufgabe wird erfindungsgemäß bei einer Behandlungsanlage der eingangs genannten Art dadurch gelöst, dass der Zufuhrkanal mindestens zwei Öffnungen aufweist, durch welche das Gas oder Gasgemisch in unterschiedliche Richtungen in die Behandlungskammer abgebbar ist und die Öffnungen mittels eines Absperrorgans verschließbar sind.

Die Erfindung zeichnet sich dadurch aus, dass nur ein Zufuhrkanal benötigt wird, um die Wagen je nach Stellung des Absperrorgans entweder von der Decke oder vom Boden der Behandlungskammer her zu durchströmen. Die Trocknung kann in einer Behandlungskammer erfolgen, ohne dass die Wagen in eine zweite Behandlungskammer verschoben werden müssen. Die vorliegende Erfindung ermöglicht eine Trocknung in nur einer Behandlungskammer bei effektiver Ausnutzung des zur Verfügung stehenden Bauraums und eignet sich auch zum nachträglichen Einbau in existierende Behandlungskammern, deren räumliche Dimensionierung nicht mehr verändert werden kann und deren zur Verfügung stehender Raum möglichst optimal genutzt werden muss.

Gemäß der Erfindung ist das Absperrorgan als eine bewegbare Klappe ausgeführt. Die Funktion des Absperrorgans kann auf diese Weise einfach und kostengünstig realisiert werden, ohne dass hierzu aufwendige, schwer montierbare oder eventuell störungsanfällige Konstruktionen verwendet werden müssen.

In einer bevorzugten Ausführungsform der Erfindung ist die Klappe im Zufuhrkanal mittels einer Welle um eine Achse parallel zur Längsachse des Zufuhrkanals drehbar gelagert und mittels einer Antriebseinheit zwischen zwei Endstellungen bewegbar. Die Lagerung der Klappe ist auf konstruktiv einfache Weise derart verwirklicht, dass die Gefahr eines Verklebens der mit dem rauchhaltigen Gasgemisch in Kontakt stehenden beweglichen Teile der Klappenlagerung minimiert wird.

Gemäß einer weiteren Ausbildung der Erfindung besteht eine erste Gruppe aus mehreren Öffnungen im Zufuhrkanal und ist mittels der Klappe verschließbar und eine zweite Gruppe besteht aus mehreren Öffnungen im Zufuhrkanal und ist mittels der Klappe verschließbar. Durch die Anzahl der Öffnungen kann der Luftdurchsatz pro Gruppe vorgegeben werden. Die sich ausbildende Strömung kann auf diese Weise an die jeweiligen individuellen Eigenschaften der betreffenden Behandlungskammern und die zu behandelnden Produkte angepasst werden.

In einer bevorzugten Weiterbildung der Erfindung sind die Öffnungen als Düsen ausgestaltet. Mit Hilfe der Düsen können die Strömungsrichtung und -geschwindigkeit des Gases oder des Gasgemisches mit hoher Genauigkeit eingestellt und auf den jeweiligen Anwendungsfall angepasst werden. Des Weiteren kann die Anordnung der Düsen am Zufuhrkanal so gewählt werden, dass diese mit Hilfe der Klappe effektiv verschließbar sind.

Bevorzugt weist der Zufuhrkanal einen im wesentlichen viereckigen Querschnitt auf und ist im wesentlichen in einer oberen Ecke der Behandlungskammer angeordnet. Der zur Verfügung stehende Bauraum innerhalb der Behandlungskammer wird mit dieser Wahl des Querschnitts des Zufuhrkanals im Vergleich zu anderen Ausführungen, wie z. B. kreisförmigen Querschnitten, effektiver genutzt.

Gemäß einer weiteren bevorzugten Ausführungsform sind die Düsen der ersten Gruppe im wesentlichen horizontal und die Düsen der zweiten Gruppe im wesentlichen vertikal am Luftzufuhrkanal befestigt. Je nach Stellung der Klappe wird die Luft entweder durch die vertikal oder die horizontal angeordneten Düsen in die Behandlungskammer eingeleitet. Entsprechend werden die Wagen im wesentlichen entweder vom Boden oder von der Decke der Behandlungskammer her durchströmt und eine gleichmäßige Trocknung der zu behandelnden Produkte erreicht.

In einer bevorzugten Weiterbildung der Erfindung weisen die Düsen in horizontaler Richtung einen anderen Querschnitt auf als die Düsen in vertikaler Richtung, so dass sich in den beiden Ausblasrichtungen unterschiedliche Strömungsvolumina und -geschwindigkeiten ergeben. Damit kann die Durchströmung der Wagen von oben und von unten unterschiedlich stark eingestellt werden.

Vorzugsweise weist die Klappe einen Anschlagabschnitt auf und ist so drehbar gelagert, dass sie in einer ersten Endstellung die Düsen der ersten Gruppe und in einer zweiten Endstellung die Düsen der zweiten Gruppe im wesentlichen verschließt. Die Klappe und der Anschlagabschnitt sind derart dimensioniert, dass in den jeweiligen Endstellungen der Klappe die Düsen weitgehend verschlossen sind und somit der Luftdurchsatz durch diese Düsen weitgehend unterbrochen wird, ohne dass sich die Düsen und die Klappe berühren. Dies ist insbesondere deshalb von Bedeutung, da das rauchhaltige Gasgemisch sich auf den Düsenoberflächen absetzt und eine klebrige Schicht bildet. Würde die Klappe direkt auf den Randflächen der Düsen aufliegen und einige Zeit nicht bewegt werden, könnte es zu einem Festkleben kommen. Die Funktionsfähigkeit der Behandlungsanlage wäre dann gefährdet.

In einer vorteilhaften Ausführung der Erfindung ist die Antriebseinheit der Klappe so angeordnet, dass sie nicht mit dem in der Behandlungskammer befindlichen Gas oder Gasgemisch in Kontakt tritt. Die Antriebseinheit kann in geschlossenen Ausnehmungen des Zufuhrkanals angeordnet sein, die frei von rauchhaltigen Gasgemischen sind. Durch die Wand dieser Ausnehmung greift die Antriebseinheit an einer starr mit der Klappe verbundenen Welle an, um die Klappe von einer in die andere Endstellung zu bringen. Alternativ kann die Antriebseinheit in separaten geschlossenen Kammern in der Behandlungsanlage untergebracht sein. Eine weitere Möglichkeit wäre, die Antriebseinheit außerhalb der Behandlungskammer anzubringen und so den Kontakt mit dem Gas oder Gasgemisch zu vermeiden. Auf diese Weise wird verhindert, dass das rauchhaltige Gasgemisch die Funktionsfähigkeit der Antriebseinheit beeinträchtigt, wenn sich dieses auf beweglichen Teilen der Antriebseinheit absetzt und diese verklebt.

Vorzugsweise ist die Antriebseinheit als pneumatischer Hub- oder Drehzylinder ausgeführt. Diese Arten des Antriebs sind Standard, können ohne komplizierten konstruktiven Aufwand installiert werden und haben sich als sehr robust und zuverlässig, insbesondere in aggressiven Umgebungsmedien, erwiesen.

Auf vorteilhafte Weise wird die Erfindung durch mindestens eine zweiten mit der Behandlungskammer verbundenen Auslasskanal zum Ableiten eines Gases oder Gasgemisches aus der Behandlungskammer weitergebildet. Das Vorsehen mindestens eines zweiten Auslasskanals schafft die Möglichkeit, die Strömung des Gases oder des Gasgemisches so durch die Wagen zu führen, dass der Trocknungsvorgang möglichst gleichmäßig vonstatten geht. Das Vorsehen eines zweiten Auslasskanals ermöglicht, sequentiell entweder den ersten oder den zweiten Auslasskanal zum Ableiten zu verwenden, so dass je nach Anordnung der Auslasskanäle die Strömungsrichtung geändert werden kann. Auf diese Weise ist es möglich, die Wagen von verschiedenen Richtungen her anzuströmen, wodurch eine Vergleichmäßigung des Trocknungsvorgangs erzielt wird. Dadurch, dass die Feuchtigkeitsbeladung des Gases oder Gasgemisches während des Durchtritts durch die Wagen ansteigt, werden die zuerst angeströmten Würste in einem stärkeren Maße getrocknet als Würste, die sich dort befinden, wo das Gas oder das Gasgemisch aus den Wagen austritt. Eine wiederholende Änderung der Strömungsrichtung verringert die Unterschiede in den Trocknungsgraden der sich in den Wagen befindenden Würste.

In einer bevorzugten Ausführungsform sind mindestens ein erster Auslasskanal im wesentlichen entlang der Mitte der Decke und mindestens ein weiterer Auslasskanal im wesentlichen entlang einer unteren Ecke der Behandlungskammer parallel zum ersten Auslasskanal angeordnet. Die Wahl der Anordnung der Auslasskanäle führt zu einer definierten Strömung, die im wesentlichen einen U-förmigen Weg vom Zufuhr- zum Auslasskanal zurücklegt. Je nachdem, durch welche Düse oder Düsenreihe das Gas oder Gasgemisch in die Behandlungskammer eingeleitet und durch welchen Auslasskanal das Gas oder Gasgemisch abgeleitet wird, können die Wagen im wesentlichen entweder vom Boden oder von der Decke der Behandlungskammer her durchströmt werden.

In einer weiteren Ausführungsform besteht der untere Auslasskanal nur aus einem Abdeckblech. Im Vergleich zu bekannten Lösungen, bei denen der Auslasskanal entweder einen geschlossenen rechteckigen Querschnitt aufweist oder als Seitenwand der Behandlungskammer dient, ist der Herstellungsaufwand geringer.

Gemäß der Erfindung weist das Abdeckblech im Bodenbereich der Behandlungskammer einen im wesentlichen parallel zur Seitenwand verlaufenden Abschnitt mit mindestens einer Öffnung zum Ableiten von Gas aus der Behandlungskammer auf.

Die Erfindung wird weitergebildet, indem das Abdeckblech einen weiteren Abschnitt aufweist, der gerade oder gekrümmt, insbesondere zur unteren Ecke der Behandlungskammer hin gekrümmt ist oder aus mehreren ebenen Unterabschnitten besteht, die ebenfalls zur unteren Ecke der Behandlungskammer hin gerichtete Querschnittsverjüngungen des Auslasskanals bewirken. In allen Ausführungsformen des Abdeckblechs wird erreicht, dass die Strömung beim vertikalen Einleiten des Gases oder Gasgemisches in die Behandlungskammer strömungsgünstig von einer vertikalen in eine horizontale Strömungsrichtung umgelenkt wird. Wären die unteren Ecken der Behandlungskammer nicht mittels Abdeckblechen gemäß der Erfindung verkleidet und würde keine besondere Maßnahme zum Umlenken der Strömung ergriffen, würde es zur Bildung von Verwirbelungen durch den unsteten Übergang von der vertikalen in die horizontale Strömungsrichtung kommen, durch welche die Strömungsgeschwindigkeit reduziert wird. Die Bildung von Verwirbelungen wird mit Hilfe der erfindungsgemäßen Gestaltung und Positionierung des Auslasskanals reduziert. Insbesondere, wenn das Abdeckblech zur Ecke der Behandlungskammer hin gekrümmt ist oder entsprechende ebene Unterabschnitte aufweist, wird eine strömungstechnisch sehr günstige Umlenkung der Strömung von der vertikalen in die horizontale Richtung und die Ausbildung einer gleichmäßigen Strömung über die ganze Behandlungskammer hin gewährleistet.

Die Erfindung wird ferner dadurch weitergebildet, dass das Abdeckblech an seinem oberen seitlichen Ende um eine entlang der Seitenwand der Behandlungskammer horizontal verlaufende Achse drehbar befestigt ist. So kann das Abdeckblech beispielsweise zur Reinigung der Behandlungskammer schnell und einfach durch Hochklappen entfernt und anschließend wieder in die ursprüngliche Position zurückversetzt werden.

In einer weiteren Ausbildung der Erfindung wirken die Klappe und die Ableitung des Gases oder des Gasgemisches derart zusammen, dass in der ersten Endstellung der Klappe das Gas oder das Gasgemisch durch den an der Decke der Behandlungskammer angebrachten Auslasskanal und in der zweiten Endstellung der Klappe das Gas oder Gasgemisch durch den in den Ecken angeordneten Auslasskanal aus der Behandlungskammer ableitbar ist. Dieses Zusammenwirken zwischen der Stellung der Klappe und dem für die Ableitung des Gases gewählten Auslasskanal eröffnet die Möglichkeit, die Wagen entweder von der Decke oder vom Boden der Behandlungskammer her zu durchströmen und so bei effektiver Ausnutzung des zur Verfügung stehenden Bauraums eine gleichmäßige Trocknung der Produkte zu realisieren, ohne dass die Wagen in eine separate Kammer gefahren werden müssen.

Vorteilhafte Ausführungsformen der erfindungsgemäßen Behandlungsanlage sind in den Unteransprüchen angegeben und ergeben sich aus der nachfolgenden Beschreibung bevorzugter Ausführungsbeispiele, die anhand der Figuren näher erläutert sind.

Es zeigen
- Fig. 1: eine Querschnittszeichnung der erfindungsgemäßen Behandlungskammer,
- Fig. 2: eine Querschnittszeichnung einer Düse,
- Fig. 3: eine Querschnittszeichnung des erfindungsgemäßen Zufuhrkanals,
- Fig. 4: eine Querschnittszeichnung des erfindungsgemäßen Zufuhrkanals im eingebauten Zustand,
- Fig. 5: eine Seitenansicht des erfindungsgemäßen Zufuhrkanals,
- Fig. 6: eine Querschnittszeichnung des erfindungsgemäßen Auslasskanals.

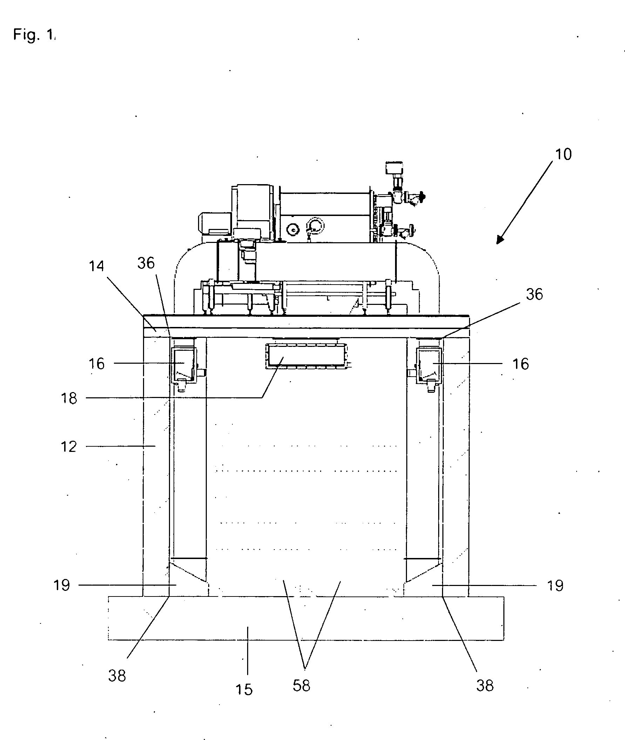

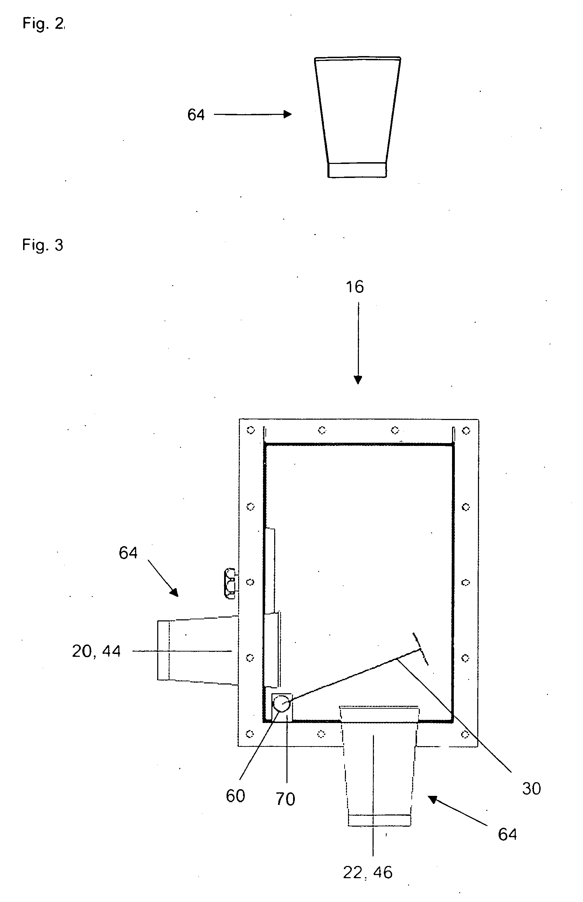

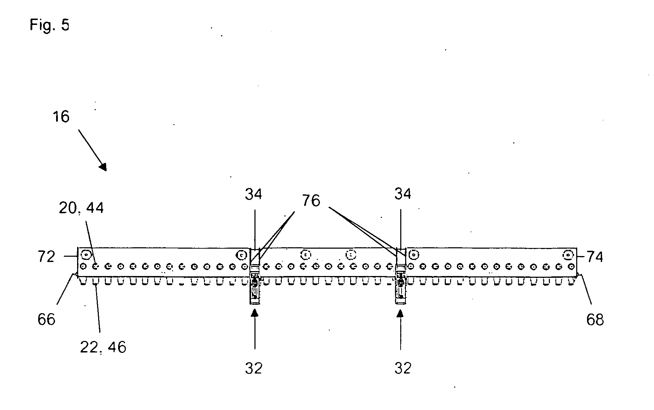

In Figur 1 ist eine Behandlungsanlage für Lebensmittel, insbesondere Rohwurst und Rohpökelware, dargestellt, die eine Behandlungskammer 10 umfasst und mit erfindungsgemäßen Zufuhrkanälen 16 und erfindungsgemäßen Auslasskanälen 19 ausgestattet ist. Ferner ist ein weiterer Auslasskanal 18, der in der Mitte einer Decke 14 der Behandlungskammer 10 angebracht ist sowie gestrichelt dargestellte Wagen 58 zu sehen, in die die Produkte (nicht dargestellt) zur Trocknung hineingehängt oder gelegt werden. Der Zufuhrkanal 16 besitzt einen im wesentlichen viereckigen Querschnitt und ist im wesentlichen in der oberen Ecke 36 nahe an einer Seitenwand 12 und der Decke 14 der Behandlungskammer 10 angeordnet. Der Auslasskanal 19 ist im wesentlichen in einer unteren Ecke 38 bündig mit einem Boden 15 und der Seitenwand 12 der Behandlungskammer 10 angeordnet. Das Gas, welches im wesentlichen aus konditionierter Luft besteht, oder das Gasgemisch, das im wesentlichen aus einem Gemisch aus konditionierter Luft und Rauch besteht, wird in einem nicht dargestellten Aggregat aufbereitet, dem der Rauch aus einem nicht dargestellten Raucherzeuger zugeführt wird, und in den Zufuhrkanal 16 geleitet, der im wesentlichen vertikal gerichtete Öffnungen 46 und im wesentlichen horizontal gerichtete Öffnungen 44 aufweist, die im Ausführungsbeispiel als Düsen 64 ausgeführt sind (Fig. 2, 3, 4 und 5). Die Klappe 30 ist im Zufuhrkanal 16 auf einer Welle 60 angeordnet, die drehbar gelagert ist, so dass die Klappe mittels einer Antriebseinheit 32 (Fig. 5) zwischen zwei Endstellungen bewegbar ist. In einer ersten Endstellung bedeckt die Klappe 30 im wesentlichen die Düsen 64 der zweiten Gruppe 46, das Gas wird im wesentlichen durch die Düsen 64 der ersten Gruppe 44 in die Behandlungskammer 10 eingeleitet und durch den Auslasskanal 19 abgeleitet. In der zweiten Endstellung der Klappe 30 werden die Düsen 64 der ersten Gruppe 44 im wesentlichen bedeckt, das Gas wird im wesentlichen durch die Düsen 64 der zweiten Gruppe 46 in die Behandlungskammer 10 eingeleitet und durch den Auslasskanal 18 abgeführt. Auf diese Weise können die Wagen 58 entweder vom Boden 15 oder von der Decke 14 der Behandlungskammer 10 her durchströmt werden.

Figur 2 zeigt eine Düse 64, wie sie im Ausführungsbeispiel verwendet wird.

Figur 3 zeigt eine detaillierte Querschnittszeichnung des erfindungsgemäßen Zufuhrkanals 16 mit horizontal ausgerichteten Düsen 64 der ersten Gruppe 44 und vertikal ausgerichteten Düsen 64 der zweiten Gruppe 46. Die Klappe 30 ist auf der Welle 60 befestigt, die beispielsweise mittels nicht dargestellter Wälz- oder Gleitlager drehbar gelagert sind. Die Längsachse der Welle 60 bildet gleichzeitig die Drehachse der Klappe 30, die sich in Figur 3 in der Bewegung zwischen der ersten Endstellung, in der sie beispielsweise die Düsen 64 der zweiten Gruppe 46 verdeckt, und der zweiten Endstellung, in der sie die Düsen 64 der ersten Gruppe 44 verschießt, befindet. Die Längsachse der Welle 60 verläuft beabstandet von den Wänden des Zufuhrkanals 16, auf denen sich die Öffnungen 20 und 22 bzw. die Düsen der ersten und zweiten Gruppe 44 und 46 befinden, so dass die Klappe 30 in ihren beiden Endstellungen im wesentlichen parallel zu den Oberflächen der Düsen 64 verläuft. Die Welle 60 kann entweder in Stirnflächen 72, 74 und 76 des Zufuhrkanals, wenn diese ausreichend dimensioniert sind, um die entstehenden Kräfte aufzunehmen, oder in Lagersockeln 70 gelagert sein, die sich vorzugsweise benachbart zu den Stirnflächen 72, 74 und 76 befinden.

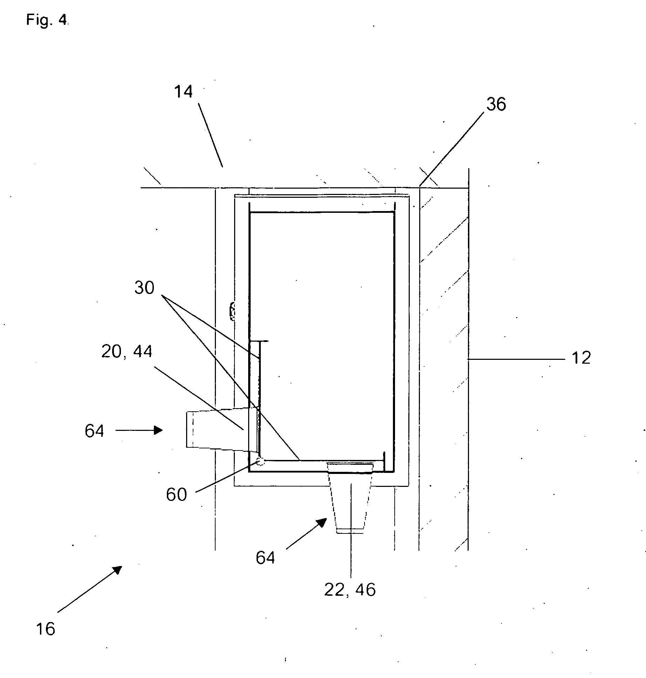

Figur 4 stellt den erfindungsgemäßen Zufuhrkanal 16 im eingebauten Zustand in einer oberen Ecke 36 der Behandlungskammer 10 dar. Des weiteren ist die Klappe 30 jeweils in ihren beiden Endstellungen zu sehen. Der Anschlagquerschnitt der Klappe 30, der im Ausführungsbeispiel einen im wesentlichen T-förmigen Querschnitt aufweist, bewirkt, dass ein gewisser Abstand zwischen der Klappe 30 und der Oberfläche der Düsen 64 der ersten Gruppe 44 und der zweiten Gruppe 46 verbleibt. Auf Grund des hohen Rauchanteils des eingeleiteten Gasgemisches schlägt sich eine klebrige Schicht auf den Oberflächen der Düsen 64 und auf der Klappe 30 nieder. Würde die Klappe 30 mit den Düsen 64 in Kontakt treten, könnte es zu einem Verkleben kommen und die Bewegbarkeit der Klappe 30 nicht mehr gegeben sein.

In Figur 5 ist eine Seitenansicht des Zufuhrkanals 16 dargestellt. In der gezeigten Ausführung weist der Zufuhrkanal 16 Ausnehmungen 34 auf, die durch die Stirnflächen 76 seitlich begrenzt werden. Im Bereich der Ausnehmungen 34 tritt die Welle 60 aus dem Zufuhrkanal 16 heraus und die Klappe 30 ist hier unterbrochen. Außerhalb des Zufuhrkanals 16 im Bereich der Ausnehmungen 34 ist die Welle 60 mit der Antriebseinheit 32 derart verbunden, dass die Welle 60 und damit auch die Klappe 30 zwischen ihren beiden Endstellungen verdrehbar ist. Dies kann beispielsweise durch einen an der Welle 60 im Bereich der Ausnehmung 34 angebrachten Hebel realisiert werden, an welche z.B. ein Hubzylinder eingreifen kann. Weiterhin sind in Figur 5 die beiden Enden 66 und 68 der Welle 60 sowie Revisionsöffnungen 78 am Zufuhrkanal ersichtlich.

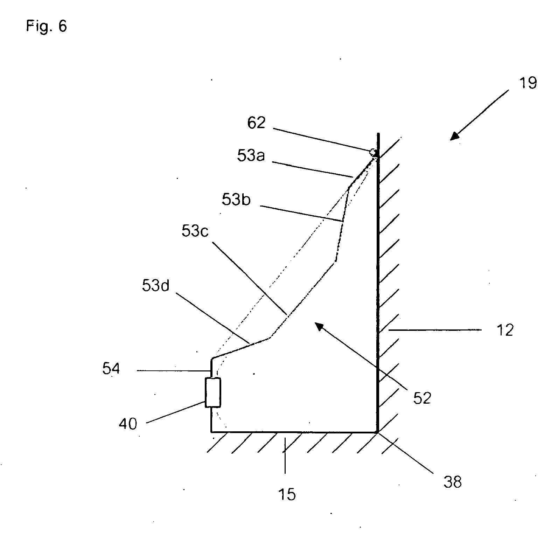

In Figur 6 ist eine Querschnittszeichnung des Auslasskanals 19 gegeben. Das Kanalblech 52 ist in der dargestellten Ausführungsform in vier ebene Abschnitte 53a-d unterteilt und weißt einen im Bodenbereich parallel zur Seitenwand 12 verlaufenden Abschnitt 54 mit mindestens einer Öffnung 40 auf, durch die das Gas oder Gasgemisch aus der Behandlungskammer 10 abgeleitet werden kann. Die in Figur 5 dargestellten ebenen Abschnitte 53a-d des Kanalblechs 52 bewirken eine Querschnittsverjüngung des Auslasskanals 18 zur unteren Ecke 38 der Behandlungskammer 10 hin. Die Abschnitte 53a-d können auch zu einem zur unteren Ecke 38 hin gekrümmten Abschnitt zusammengefasst sein. Diese Ausführungsformen bewirken, dass die Strömung bei einer vertikalen Einleitung des Gases oder Gasgemisches in die Behandlungskammer 10 derart von der Vertikalen in die Horizontale umgeleitet wird, dass eine Wirbelbildung besonders gering gehalten wird. Die Strömung kann sich daher gleichmäßiger über die gesamte Behandlungskammer 10 ausbilden und die Trocknung der Produkte gleichmäßiger erfolgen.

## Patentansprüche

1. Behandlungsanlage für Lebensmittel, insbesondere für Rohwurst und Rohpökelware, mit einer geschlossenen Behandlungskammer (10), mindestens einem mit der Behandlungskammer (10) verbundenen Zufuhrkanal (16) zum Einleiten eines Gases oder Gasgemisches in die Behandlungskammer (10) und mindestens einem ersten mit der Behandlungskammer (10) verbundenen Auslasskanal (18) zum Ableiten eines Gases oder Gasgemisches aus der Behandlungskammer (10),
**dadurch gekennzeichnet, dass** die Behandlungsanlage mindestens ein Absperrorgan (30) aufweist und der Zufuhrkanal (16) mindestens zwei Öffnungen (20, 22) aufweist, durch welche das Gas oder Gasgemisch in unterschiedliche Richtungen in die Behandlungskammer (10) abgebbar ist und die Öffnungen (20, 22) mittels des Absperrorgans (30) verschließbar sind.

2. Behandlungsanlage nach Anspruch 1,
**dadurch gekennzeichnet, dass** das Absperrorgan als eine bewegbare Klappe (30) ausgeführt ist.

3. Behandlungsanlage nach Anspruch 2,
**dadurch gekennzeichnet, dass** die Klappe (30) im Zufuhrkanal (16) mittels einer Welle (60) um eine Achse parallel zur Längsachse des Zufuhrkanals (16) drehbar gelagert und mittels einer Antriebseinheit (32) zwischen zwei Endstellungen bewegbar ist.

4. Behandlungsanlage nach einem der vorherigen Ansprüche,
**dadurch gekennzeichnet, dass** eine erste Gruppe (44) aus mehreren Öffnungen (20) im Zufuhrkanal (16) besteht und mittels der Klappe (30) verschließbar ist und eine zweite Gruppe (46) aus mehreren Öffnungen (22) im Zufuhrkanal (16) besteht und mittels der Klappe (30) verschließbar ist.

5. Behandlungsanlage nach einem der vorherigen Ansprüche,
**dadurch gekennzeichnet, dass** die Öffnungen (20, 22) als Düsen (64) ausgeführt sind.

6. Behandlungsanlage nach einem der vorherigen Ansprüche,
**dadurch gekennzeichnet, dass** der Zufuhrkanal (16) einen im wesentlichen viereckigen Querschnitt aufweist und im wesentlichen nahe der oberen Ecke (36) der Behandlungskammer (10) angeordnet ist.

7. Behandlungsanlage nach einem der vorherigen Ansprüche,
**dadurch gekennzeichnet, dass** die Düsen (64) der ersten Gruppe (44) im wesentlichen horizontal und die Düsen (64) der zweiten Gruppe (46) im wesentlichen vertikal am Luftzufuhrkanal (16) befestigt sind.

8. Behandlungsanlage nach einem der vorherigen Ansprüche,
**dadurch gekennzeichnet, dass** die Düsen (64) der ersten Gruppe (44) einen anderen Durchmesser aufweisen als die Düsen (64) der zweiten Gruppe (46).

9. Behandlungsanlage nach einem der vorherigen Ansprüche,
**dadurch gekennzeichnet, dass** die Klappe (30) einen Anschlagabschnitt aufweist und so drehbar gelagert ist, dass sie in einer ersten Endstellung die Düsen (64) der ersten Gruppe (44) und in einer zweiten Endstellung die Düsen (64) der zweiten Gruppe (46) im wesentlichen verschließt.

10. Behandlungsanlage nach einem der vorherigen Ansprüche,
**dadurch gekennzeichnet, dass** die Antriebseinheit (32) der Klappe (30) so angeordnet ist, dass sie nicht mit dem in der Behandlungskammer (10) befindlichen Gas oder Gasgemisch in Kontakt tritt.

11. Behandlungsanlage nach einem der vorherigen Ansprüche,
**dadurch gekennzeichnet, dass** die Antriebseinheit (32) als pneumatischer Hub- oder Drehzylinder ausgeführt ist.

12. Behandlungsanlage nach einem der vorherigen Ansprüche,
**gekennzeichnet durch** mindestens einem zweiten mit der Behandlungskammer (10) verbundenen Auslasskanal (19) zum Ableiten eines Gases oder Gasgemisches aus der Behandlungskammer (10).

13. Behandlungsanlage nach einem der vorherigen Ansprüche,
**dadurch gekennzeichnet, dass** mindestens ein erster Auslasskanal (18) im wesentlichen entlang der Mitte der Decke (14) und mindestens ein zweiter Auslasskanal (19) im wesentlichen entlang einer unteren Ecke (38) der Behandlungskammer (10) parallel zu (18) angeordnet sind.

14. Behandlungsanlage nach mindestens einem der vorherigen Ansprüche 12 und 13,
**dadurch gekennzeichnet, dass** der Auslasskanal (19) im wesentlichen nur aus einem Abdeckblech (52) besteht.

15. Behandlungsanlage nach Anspruch 14,
**dadurch gekennzeichnet, dass** das Abdeckblech (52) im Bodenbereich einen im wesentlichen parallel zur Seitenwand (12) verlaufenden Abschnitt (54) mit mindestens einer Öffnung (40) zum Ableiten des Gases oder Gasgemisches aus der Behandlungskammer (10) aufweist.

16. Behandlungsanlage nach Anspruch 14 oder 15,
**dadurch gekennzeichnet, dass** das Abdeckblech (52) einen weiteren Abschnitt (53) aufweist, der weder parallel zur Seitenwand (12) noch zum Boden (15) verläuft und gerade oder gekrümmt, insbesondere zur unteren Ecke (38) der Behandlungskammer (10) hin gekrümmt ist oder aus mehreren geraden Unterabschnitten (53 a-d) besteht, die zur unteren Ecke (38) der Behandlungskammer (10) hin gerichtete Querschnittsverjüngungen des Auslasskanals (19) bewirken.

17. Behandlungsanlage nach Anspruch 14, 14 oder 16,
**dadurch gekennzeichnet, dass** das Abdeckblech (52) an seinem oberen seitlichen Ende an der Seitenwand (12) der Behandlungskammer (10) drehbar befestigt ist.

18. Behandlungsanlage nach einem der vorherigen Ansprüche,
**dadurch gekennzeichnet, dass** die Klappe (30) und die Ableitung des Gases oder Gasgemisches derart zusammenwirken, so dass in der ersten Endstellung die Klappe (30) die Düsen (64) der ersten Gruppe (44) im wesentlichen verdeckt und das Gas oder Gasgemisch über den Auslasskanal (18) ableitbar ist und in der zweiten Endstellung die Klappe (30) die Düsen der zweiten Gruppe (46) im wesentlichen verdeckt und das Gas oder Gasgemisch über den Auslasskanal (19) aus der Behandlungskammer (10) ableitbar ist.

## Claims

1. A treatment installation for foodstuffs, in particular for uncooked sausage and uncooked cured goods, having a closed treatment chamber (10), at least one feed channel (16), connected to the treatment chamber (10), to introduce a gas or gas mixture into the treatment chamber (10) and at least a first exhaust channel (18), connected to the treatment chamber (10), for leading away a gas or gas mixture from the treatment chamber (10), **characterised in that** the treatment installation has at least one shut-off device (30) and the feed channel (16) has at least two openings (20, 22) through which the gas or gas mixture can be emitted in different directions into the treatment chamber (10) and the openings (20, 22) are closable by means of the shut-off device (30).

2. A treatment installation according to claim 1, **characterised in that** the shut-off device is in the form of a movable flap (30).

3. A treatment installation according to claim 2, **characterised in that** the flap (30) is mounted in the feed channel (16) by means of a shaft (60) so as to be rotatable about an axis parallel to the longitudinal axis of the feed channel (16) and is movable between two end positions by means of a drive unit (32).

4. A treatment installation according to any one of the preceding claims, **characterised in that** a first group (44) consists of a plurality of openings (20) in the feed channel (16) and is closable by means of the flap (30) and a second group (46) consists of a plurality of openings (22) in the feed channel (16) and is closable by means of the flap (30).

5. A treatment installation according to any one of the preceding claims, **characterised in that** the openings (20, 22) are in the form of nozzles (64).

6. A treatment installation according to any one of the preceding claims, **characterised in that** the feed channel (16) has a substantially quadrangular cross-section and is arranged substantially close to the upper corner (36) of the treatment chamber (10).

7. A treatment installation according to one of the preceding claims, **characterised in that** the nozzles (64) of the first group (44) are secured to the air feed channel (16) in a substantially horizontal manner and the nozzles (64) of the second group (46) are secured to the air feed channel (16) in a substantially vertical manner.

8. A treatment installation according to any one of the preceding claims, **characterised in that** the nozzles (64) of the first group (44) have a different diameter to the nozzles (64) of the second group (46).

9. A treatment installation according to any one of the preceding claims, **characterised in that** the flap (30) has a stop portion and is rotatably mounted in such a manner that in a first end position it substantially closes the nozzles (64) of the first group (44) and in a second end position it substantially closes the nozzles (64) of the second group (46).

10. A treatment installation according to any one of the preceding claims, **characterised in that** the drive unit (32) of the flap (30) is arranged in such a manner that it does not enter into contact with the gas or gas mixture located in the treatment chamber (10).

11. A treatment installation according to any one of the preceding claims, **characterised in that** the drive unit (32) is in the form of a pneumatic lifting cylinder or rotary cylinder.

12. A treatment installation according to any one of the preceding claims, **characterised by** at least a second exhaust channel (19), connected to the treatment chamber (10), for leading away a gas or gas mixture from the treatment chamber (10).

13. A treatment installation according to any one of the preceding claims, **characterised in that** at least a first exhaust channel (18) is arranged substantially along the centre of the cover (14) and at least a second exhaust channel (19) is arranged substantially along a lower corner (38) of the treatment chamber (10), parallel to (18).

14. A treatment installation according to at least one of the preceding claims 12 and 13, **characterised in that** the exhaust channel (19) consists substantially only of a cover plate (52).

15. A treatment installation according to claim 14, **characterised in that** in the bottom region, the cover plate (52) has a portion (54), running substantially parallel to the lateral wall (12), with at least one opening (40) for leading away the gas or gas mixture from the treatment chamber (10)

16. A treatment installation according to claim 14 or 15, **characterised in that** the cover plate (52) has another portion (53) which runs parallel neither to the lateral wall (12) nor to the bottom (15) and which is straight or curved, in particular curved towards the lower corner (38) of the treatment chamber (10), or consists of a plurality of straight lower portions (53 a-d) which bring about cross-sectional taperings, directed towards the lower corner (38) of the treatment chamber (10), of the exhaust channel (19).

17. A treatment installation according to claim 14, 14[sic] or 16, **characterised in that** at its upper lateral end, the cover plate (52) is rotatably secured to the lateral wall (12) of the treatment chamber (10).

18. A treatment installation according to any one of the preceding claims, **characterised in that** the flap (30) and the leading away of the gas or gas mixture cooperate in such a manner that the flap (30) substantially covers the nozzles (64) of the first group (44) in the first end position and the gas or gas mixture can be led away via the exhaust channel (18) and the flap (30) substantially covers the nozzles (64) of the second group (46) in the second end position and the gas or gas mixture can be led away from the treatment chamber (10) via the exhaust channel (19).

## Revendications

1. Installation de traitement pour produits alimentaires, en particulier pour saucisson sec et produits de salaison crus, avec une chambre de traitement (10) fermée, au moins un canal d'amenée (16) relié à la chambre de traitement (10) et destiné à introduire un gaz ou mélange gazeux dans la chambre de traitement (10), et au moins un premier canal de décharge (18) relie à la chambre de traitement (10) et destiné à évacuer un gaz ou mélange gazeux de la chambre de traitement (10),
**caractérisée en ce que** l'installation de traitement présente au moins un organe de verrouillage (30) et le canal d'amenée (16) présente au moins deux ouvertures (20, 22) par lesquelles le gaz ou mélange gazeux peut se dégager dans différentes directions dans la chambre de traitement (10), et les ouvertures (20, 22) peuvent être fermées au moyen de l'organe de verrouillage (30).

2. Installation de traitement selon la revendication 1,
**caractérisée en ce que** l'organe de verrouillage est réalisé comme une trappe mobile (30).

3. Installation de traitement selon la revendication 2,
**caractérisée en ce que** la trappe (30) est montée pivotante dans le canal d'amenée (16) au moyen d'un arbre (60) autour d'un axe parallèle à l'axe longitudinal du canal d'amenée (16) et mobile au moyen d'une unité d'entraînement (32) entre deux positions extrêmes.

4. Installation de traitement selon l'une quelconque des revendications précédentes,
**caractérisée en ce qu'**un premier groupe (44) se compose de plusieurs ouvertures (20) dans le canal d'amenée (16) et peut être fermé au moyen de la trappe (30) et qu'un deuxième groupe (46) se compose de plusieurs ouvertures (22) dans le canal d'amenée (16) et peut être fermé au moyen de la trappe (30).

5. Installation de traitement selon l'une quelconque des revendications précédentes,
**caractérisée en ce que** les ouvertures (20, 22) sont réalisées comme des buses (64).

6. Installation de traitement selon l'une quelconque des revendications précédentes,
**caractérisée en ce que** le canal d'amenée (16) présente une section transversale substantiellement quadrangulaire et est disposé substantiellement près du coin supérieur (36) de la chambre de traitement (10).

7. Installation de traitement selon l'une quelconque des revendications précédentes,
**caractérisée en ce que** les buses (64) du premier groupe (44) sont fixées de façon substantiellement horizontale et les buses (64) du deuxième groupe (46) sont fixées de façon substantiellement verticale sur le canal d'amenée d'air (16).

8. Installation de traitement selon l'une quelconque des revendications précédentes,
**caractérisée en ce que** les buses (64) du premier groupe (44) présentent un autre diamètre que les buses (64) du deuxième groupe (46).

9. Installation de traitement selon l'une quelconque des revendications précédentes,
**caractérisée en ce que** la trappe (30) présente une portion de butée et est montée pivotante de telle sorte qu'elle ferme substantiellement dans une première position extrême les buses (64) du premier groupe (44) et dans une deuxième position extrême les buses (64) du deuxième groupe (46).

10. Installation de traitement selon l'une quelconque des revendications précédentes,
**caractérisée en ce que** l'unité d'entraînement (32) de la trappe (30) est agencée de telle sorte qu'elle n'entre pas en contact avec le gaz ou le mélange gazeux se trouvant dans la chambre de traitement (10).

11. Installation de traitement selon l'une quelconque des revendications précédentes,
**caractérisée en ce que** l'unité d'entraînement (32) est réalisée comme un vérin hydraulique ou rotatif.

12. Installation de traitement selon l'une quelconque des revendications précédentes,
**caractérisée par** au moins un deuxième canal de décharge (19) relié à la chambre de traitement (10) et destiné à évacuer un gaz ou mélange gazeux de la chambre de traitement (10).

13. Installation de traitement selon l'une quelconque des revendications précédentes,
**caractérisée en ce qu'**au moins un premier canal de décharge (18) est disposé substantiellement le long du centre du plafond (14) et au moins un deuxième canal de décharge (19) est disposé substantiellement suivant un coin inférieur (38) de la chambre de traitement (10) en parallèle à (18).

14. Installation de traitement selon au moins l'une des revendications précédentes 12 et 13,
**caractérisée en ce que** le canal de décharge (19) se compose substantiellement d'une seule tôle de protection (52).

15. Installation de traitement selon la revendication 14,
**caractérisée en ce que** la tôle de protection (52) présente au niveau du plancher une portion (54) s'étendant substantiellement en parallèle à la paroi latérale (12) et comportant au moins une ouverture (40) pour évacuer le gaz ou le mélange gazeux de à chambre de traitement (10).

16. Installation de traitement selon la revendication 14 ou 15,
**caractérisée en ce que** la tôle de protection (52) présente une portion supplémentaire (53) qui ne s'étend en parallèle ni à la paroi latérale (12) ni au plancher (15) et est droite ou courbe, en particulier courbée vers le coin inférieur (38) de la chambre de traitement (10), ou se compose de plusieurs portions secondaires droites (53 a-d) provoquant des réductions de section transversale du canal de décharge (19), dirigées vers le coin inférieur (38) de la chambre de traitement (10).

17. Installation de traitement selon la revendication 14, 15 ou 16,
**caractérisée en ce que** la tôle de protection (52) est fixée pivotante par son extrémité latérale supérieure à la paroi latérale (12) de la chambre de traitement (10).

18. Installation de traitement selon l'une quelconque des revendications précédentes,
**caractérisée en ce que** la trappe (30) et l'évacuation du gaz ou du mélange gazeux coopèrent de telle sorte que dans la première position extrême, la trappe (30) recouvre substantiellement les buses (64) du premier groupe (44) et le gaz ou le mélange gazeux peut être évacué par l'intermédiaire du canal de décharge (18), et que dans la deuxième position extrême, la trappe (30) recouvre substantiellement les buses du deuxième groupe (46) et le gaz ou le mélange gazeux peut être évacué par l'intermédiaire du canal de décharge (19) de la chambre de traitement (10).
